# EUROPÄISCHE PATENTANMELDUNG

(11) **EP 4 431 234 A1**
(43) Veröffentlichungstag der Anmeldung: **18.09.2024**
(21) Anmeldenummer: 23161505.5
(22) Anmeldetag: 13.03.2023
(51) Int. Cl.: B24B 27/00, B24B 41/04, B23Q 1/52

(54) **VERFAHREN UND VORRICHTUNG ZUR BEARBEITUNG EINER HARTSTOFFBESCHICHTETEN WERKSTÜCKFLÄCHE EINES ROTATIONSSYMMETRISCHEN WERKSTÜCKS**

(71) Anmelder: Thielenhaus Technologies GmbH, 42285 Wuppertal (DE)
(72) Erfinder: GOEKE, Sebastian, 44289 Dortmund (DE); Schumann, Sebastian, 44369 Dortmund (DE); Lupp, Martin, 45144 Essen (DE); Schmitz, Thomas, 42929 Wermelskirchen (DE)
(74) Vertreter: Feucker, Max Martin

(57) **Zusammenfassung**

Die vorliegende Erfindung betrifft ein Verfahren und eine Vorrichtung zur Bearbeitung einer hartstoffbeschichteten Werkstückfläche eines rotationssymmetrischen Werkstücks (1) mittels mindestens einer Schleifscheibe, wobei das Verfahren die folgenden Schritte umfasst:
- Antreiben des Werkstücks (1) zu einer Rotationsbewegung um eine Werkstückrotationsachse (1.1),
- Antreiben einer Schleifscheibe (2a) zu einer Rotationsbewegung um eine Schleifscheibenrotationsachse (2a.1),
- Bearbeiten der Werkstückfläche mit der Schleifscheibe (2a), wobei die Schleifscheibe (2a) mit der Werkstückfläche in Kontakt ist, wobei ein Anstellwinkel zwischen der Schleifscheibenrotationsachse (2a.1) und der Werkstückrotationsachse (1.1) während des Bearbeitens geändert wird und der Anstellwinkel während des Bearbeitens zumindest zeitweise kontinuierlich oder mehrmals geändert wird.

## Beschreibung

Die vorliegende Erfindung betrifft ein Verfahren und eine Vorrichtung zur Bearbeitung einer hartstoffbeschichteten, insbesondere planen Werkstückfläche eines rotationssymmetrischen, insbesondere scheibenförmigen Werkstücks mittels mindestens einer Schleifscheibe. Die Erfindung betrifft insbesondere die Bearbeitung einer hartstoffbeschichteten Bremsscheibe.

Zur Bearbeitung herkömmlicher Bremsscheiben sind Verfahren und Vorrichtungen bekannt, bei denen die Bremsscheibe um eine Werkstückrotationsachse zu einer Rotationsbewegung angetrieben wird und die Schleifscheibe um die Schleifscheibenrotationsachse zu einer Rotationsbewegung angetrieben wird, wobei die Werkstückrotationsachse und die Schleifscheibenrotationsachse parallel zueinander ausgerichtet sind, so dass auch die zu bearbeitende Werkstückfläche der Bremsscheibe und die Bearbeitungsfläche der Schleifscheibe parallel zueinander ausgerichtet sind. Während der Bearbeitung liegen also die Schleifscheibe und die Bremsscheibe großflächig aneinander an.

Bei heute üblichen Bremsscheiben wird bei einem Bremsvorgang durch Abtrag der Bremsscheibe und der Bremsbeläge Feinstaub erzeugt, welcher die Umgebungsluft verschmutzt, sich aber auch auf den Felgen als Schmutz absetzen kann. Zudem kann durch Oxidation der Bremsscheibe der erste Bremsvorgang nach einer längeren Nichtbenutzung negativ beeinflusst sein. Es wurde daher bereits vorgeschlagen, die Oberflächen von Bremsscheiben mit Hartstoffpartikeln zu versehen, so dass die Bremsscheiben korrosionsbeständiger werden. So werden beispielsweise Wolframcarbidpartikeln durch Lasersintern auf die Bremsscheiben aufgebracht. Es ist allerdings weiterhin erforderlich, dass die Oberflächen der hartstoffbeschichteten Bremsschreiben zur Erzielung der erforderlichen Oberflächeneigenschaften (beispielsweise Maß- und Formgenauigkeit und Rauheit) bearbeitet werden. Die für die Reduzierung der Feinstaubbelastung vorteilhafte Hartstoffbeschichtung führt aber dazu, dass die hartstoffbeschichteten Bremsscheiben schlecht mit herkömmlichen Verfahren und Maschinen bearbeitet werden können, da große Kräfte erforderlich sind, um die Oberflächen der hartstoffbeschichteten Bremsscheiben zu bearbeiten.

Aus der nachveröffentlichten EP 4 147 821 A1 ist es bekannt, einen Anstellwinkel zwischen der Schleifscheibenrotationsachse und der Werkstückrotationsachse nicht parallel zueinander auszurichten, so dass die Schleifscheibe nur punkt- oder linienförmig auf der zu bearbeitenden Oberfläche des Werkstücks aufliegt, so dass bei gleicher externer Kraftaufbringung der Druck zwischen der Werkstückfläche und der Schleifscheibe erhöht ist. Es ist auch offenbart, dass der Anstellwinkel während der Bearbeitung einmalig geändert wird.

Aufgabe der vorliegenden Erfindung ist es daher, ein Verfahren und eine Vorrichtung anzugeben, mit denen eine hartstoffbeschichtete Bremsscheibe noch effizienter bearbeitet werden kann.

Gelöst wird die Aufgabe durch ein Verfahren und eine Vorrichtung mit den Merkmalen des jeweiligen unabhängigen Anspruchs. Vorteilhafte Weiterbildungen des Verfahrens und der Vorrichtung sind in den abhängigen Ansprüchen angegeben, wobei einzelne Merkmale der vorteilhaften Weiterbildungen in technisch sinnvoller Weise miteinander kombinierbar sind. Insbesondere sind die mit Bezug zum Verfahren offenbarten Merkmale und Vorteile auf die Vorrichtung anwendbar und umgekehrt.

Die Aufgabe wird insbesondere gelöst durch ein Verfahren zur Bearbeitung einer hartstoffbeschichteten und insbesondere planen Werkstückfläche eines rotationssymmetrischen Werkstücks mittels mindestens einer Schleifscheibe, umfassend zumindest einige der folgenden Schritte:
- Antreiben des Werkstücks zu einer Rotationsbewegung um eine Werkstückrotations achse,
- Antreiben einer Schleifscheibe zu einer Rotationsbewegung um eine Schleifscheibenrotationsachse,
- Anstellen der Schleifscheibenrotationsachse und der Werkstückrotationsachse zueinander, so dass die Schleifscheibenrotationsachse und die Werkstückrotationsachse parallel oder nicht parallel sind, und
- Bearbeiten der Werkstückfläche mit der Schleifscheibe, wobei die Schleifscheibe mit der Werkstückfläche in Kontakt ist, wobei ein Anstellwinkel zwischen der Schleifscheibenrotationsachse und der Werkstückrotationsachse während des Bearbeitens zumindest zeitweise kontinuierlich oder mehrmals geändert wird.

Die Aufgabe wird auch gelöst durch eine Vorrichtung zur Bearbeitung einer hartstoffbeschichteten und insbesondere planen Werkstückfläche eines rotationssymmetrischen Werkstücks, umfassend:
- eine Werkstückantriebseinrichtung zum Erzeugen einer Rotationsbewegung um eine Werkstückrotationsachse,
- mindestens eine Schleifscheibenantriebseinrichtung zum Erzeugen einer Rotationsbewegung um eine Schleifscheibenrotationsachse,
- mindestens eine Zustelleinrichtung zum Inkontaktbringen der Schleifscheibe mit der Werkstückfläche und
- mindestens eine Anstelleinrichtung, mit der die Schleifscheibenrotationsachse und die Werkstückrotationsachse so zueinander anstellbar sind, dass die Schleifscheibenrotationsachse und die Werkstückrotationsachse nicht parallel sind, wobei die mindestens eine Anstelleinrichtung so ausgebildet ist, dass die Werkstückrotationsachse oder die Schleifscheibenrotationsachse(n) um mehrere Rotationsfreiheitsgrade schwenkbar ist und die Anstelleinrichtung eine Magnetspindel umfasst.

Mit anderen Worten: Die Erfindung sieht in ihrem Grundgedanken vor, dass während der Bearbeitung (also während die Schleifscheibe mit dem Werkstück in Kontakt ist und beide rotatorisch angetrieben werden) der Anstellwinkel zwischen der Schleifscheibe und dem Werkstück mehrmals (also mindestens zwei Mal) in diskreten Schritten oder zumindest zeitweise kontinuierlich geändert wird. Es hat sich herausgestellt, dass durch das mehrfache oder kontinuierliche Ändern des Anstellwinkels die Abtragsraten hochgehalten werden können, so dass die Bremsscheibe effizient bearbeitet werden kann. Hierzu ist insbesondere vorgesehen, dass die Anstelleinrichtung zum Anstellen der Schleifscheibe eine Magnetspindel umfasst, welche es insbesondere ermöglicht, die Anstellung der Schleifscheibe um mehrere Rotationsfreiheitsgrade während der Bearbeitung mehrfach oder kontinuierlich zu ändern.

Da bei einer Magnetspindel in der Regel die Spindelwelle magnetisch mittels Elektromagneten berührungslos gelagert ist, tritt kein mechanischer Verschleiß auf, so dass auf eine Schmierung verzichtet werden kann. Die magnetische Lagerung der Spindelwelle ermöglicht es auch, dass die Spindelwelle in drei Raumrichtungen translatorisch (beispielsweise um einige Zehntelmillimeter) bewegt werden kann. Zudem ist es mit der Magnetspindel möglich, durch entsprechende Ansteuerung der die magnetische Lagerung realisierenden Elektromagnete die Spindelwelle in gewissen Grenzen um mehrere Freiheitsgrade (Raumrichtungen) zu drehen/schwenken.

Wenn der Anstellwinkel zwischen der Schleifscheibe und dem Werkstück geändert wird, ist die Schleifscheibe zumindest zeitweise zu dem Werkstück angestellt, so dass die Schleifscheibenrotationsachse und die Werkstückrotationsachse nicht parallel sind.

Im Falle einer planen Werkstückfläche ist somit auch die Werkstückfläche zumindest zeitweise während der Bearbeitung nicht parallel zu der planen Bearbeitungsfläche der Schleifscheibe. Eine solche Anstellung hat zur Folge, dass die Schleifscheibe mit einer kleineren Fläche (bevorzugt quasilinienförmig oder sogar nur quasi-punktförmig) mit der Werkstückfläche während der Bearbeitung in Kontakt ist. Somit kann bei gleicher Kraftaufbringung der Druck zwischen der Werkstückfläche und der Schleifscheibe erhöht werden, wodurch ein besserer Abtrag der hartstoffbeschichteten Werkstückfläche erreicht wird. So kann die angestellte Schleifscheibe beispielsweise bei ihrem ersten Einsatz nur an einer punkt- oder linienförmigen Stelle mit der zu bearbeitenden Werkstückfläche in Kontakt sein, während sich die Form der Kontaktstelle mit fortlaufender Bearbeitung aufgrund der Abnutzung der Schleifscheibe verändern kann. Durch das mehrfache oder kontinuierliche Ändern des Anstellwinkels während der Bearbeitung wird die Form der Kontaktstelle wiederholend leicht geändert, so dass die Bearbeitungseffizienz hochgehalten wird.

Prinzipiell wäre es ausreichend, wenn für jede Werkstückantriebseinrichtung genau eine Schleifscheibenantriebseinrichtung vorgesehen ist, so dass genau eine Seite des Werkstücks mittels der einen Schleifscheibe bearbeitet werden kann. Die andere Seite des Werkstücks könnte dann gegebenenfalls in einem späteren Bearbeitungsschritt mit derselben Schleifscheibe bearbeitet werden. Bevorzugt ist jedoch, dass die Vorrichtung für die eine (beziehungsweise jede) Werkstückantriebseinrichtung eine zweite Schleifscheibenantriebseinrichtung zum Erzeugen einer Rotationsbewegung um eine zweite Schleifscheibenrotationsache aufweist, die insbesondere so angeordnet ist, dass eine zweite insbesondere plane Werkstückfläche des rotationssymmetrischen Werkstücks, die der ersten Werkstückfläche gegenüberliegt, mittels einer zweiten, um die zweite Schleifenscheibenrotationsachse rotierenden Schleifscheibe bearbeitet werden kann. Bevorzugt ist die Rotationsrichtung der beiden Schleifscheiben gegensinnig. Die Rotationsrichtung der beiden Schleifscheiben kann aber auch gleichsinnig sein.

Für die zweite Schleifscheibenantriebseinrichtung ist insbesondere eine zweite Anstelleinrichtung zum Anstellen der zweiten Schleifscheibenrotationsachse zu der Werkstückrotationsachse vorgesehen, so dass die zweite Schleifscheibenrotationsachse und die Werkstückrotationsachse während der Bearbeitung der zweiten Werkstückfläche nicht parallel sind. Mit einer zweiten Schleifscheibenantriebseinrichtung und einer zweiten Anstelleinrichtung kann die zweite Werkstückfläche gleichzeitig mit der ersten Werkstückfläche bearbeitet werden, wobei aufgrund der Anstellung der zweiten Schleifscheibe zu der Werkstückrotationsachse auch ein hoher Abtrag auf der zweiten Werkstückfläche möglich ist. Die zweite Anstelleinrichtung umfasst insbesondere ebenfalls eine Magnetspindel. Die Schleifscheibenantriebsreinrichtung/Werkstückantriebseinrichtung und die zugehörige Anstelleinrichtung können in einer gemeinsamen Baueinheit realisiert sein.

Wenn eine zweite Schleifscheibe vorgesehen ist, so wird bevorzugt vorgeschlagen, dass ein Anstellwinkel zwischen der zweiten Schleifscheibenrotationsache und der Werkstückrotationsachse während des Bearbeitens (also während die zweite Schleifscheibe mit einer Oberfläche des Werkstücks in Kontakt ist) zumindest zeitweise kontinuierlich oder mehrmals geändert wird.

In diesem Zusammenhang ist insbesondere vorgesehen, dass die zweite Schleifscheibenantriebseinrichtung synchron (gleichsinnig oder gegensinnig) zu der ersten Schleifscheibenantriebseinrichtung betrieben werden kann. Der Betrag des (ersten) Anstellwinkels zwischen der (ersten) Schleifscheibenrotationsachse und der Werkstückrotationsachse kann also während der Bearbeitung zu jedem Zeitpunkt gleich dem Betrag des (zweiten) Anstellwinkels zwischen der zweiten Schleifscheibenrotationsachse und der Werkstückrotationsachse. Somit können beispielsweise beide Seiten einer Bremsscheibe gleichzeitig und gleich bearbeitet werden. Die Beträge des ersten und zweiten Anstellwinkels können während der Bearbeitung aber auch unterschiedlich sein und sich unterschiedlich ändern.

Die Vorrichtung ist bevorzugt so eingerichtet, dass die beiden Schleifscheibenantriebseinrichtungen während der Bearbeitung unabhängig voneinander und insbesondere gegensinnig relativ zu einem Maschinengestell verschwenkt werden können. Hierbei ist insbesondere auch vorgesehen, dass der erste Anstellwinkel zwischen der ersten Schleifscheibe und einer ersten zu bearbeitenden Fläche des Werkstücks synchron zu dem zweiten Anstellwinkel zwischen der zweiten Schleifscheibe und einer zweiten zu bearbeitenden Fläche des Werkstücks mehrmals oder zumindest zeitweise kontinuierlich geändert wird. Die Anstellwinkel können aber auch in unterschiedliche Anstellrichtungen geändert werden.

Zum Anstellen der Schleifscheibenrotationsachse und der Werkstückrotationsachse zueinander kann insbesondere bei der Verwirklichung nur genau einer Schleifscheibenantriebseinrichtung genau eine Anstelleinrichtung ausreichend sein, mit der entweder die Schleifscheibenantriebseinrichtung zu der Werkstückantriebseinrichtung angestellt wird oder mit der die Werkstückantriebseinrichtung zu der Schleifscheibenantriebseinrichtung angestellt wird. Bei der vorteilhaften Ausbildung von zwei Schleifscheibenantriebseinrichtungen ist bevorzugt, dass jeder Schleifscheibenantriebseinrichtung eine jeweils insbesondere eine Magnetspindel umfassende Anstelleinrichtung zugeordnet ist, so dass die beiden Schleifscheibenantriebseinrichtungen relativ zu der Werkstückantriebseinrichtung angestellt werden können.

Die Anstellung einer Schleifscheibe zu dem Werkstück kann insbesondere mittels einer Schwenkbewegung um genau einen Rotationsfreiheitsgrad erfolgen, wodurch die Werkstückrotationsachse oder die Schleifscheibenrotationsachse angestellt wird. In diesem Fall kann es ausreichend sein, wenn die entsprechende Anstelleinrichtung also genau einen Rotationsfreiheitsgrad aufweist. Wenn genau ein Rotationsfreiheitsgrad zum Anstellen der Schleifscheibe vorgesehen ist, kann insbesondere vorgesehen sein, dass die (virtuelle) Achse, um die die Schleifscheibe geschwenkt wird, orthogonal zu der jeweiligen Schleifscheibenrotationsachse ausgerichtet ist. Eine mehrfache oder kontinuierliche Änderung des Anstellwinkels erfolgt in diesem Fall dadurch, dass die entsprechende Schleifscheibe um die den einen Rotationsfreiheitsgrad definierende (virtuelle) Achse verschwenkt wird.

Es kann aber auch vorgesehen sein, dass das Anstellen eine Schwenkbewegung um zwei oder mehr Rotationsfreiheitsgrade erlaubt. Dementsprechend weist die oder jede Anstelleinrichtung zwei Rotationsfreiheitsgrade auf beziehungsweise kann die Werkstückrotationsachse(n) oder die Schleifscheibenrotationsachse um zwei Rotationsfreiheitsgrade verschwenkt werden. Wenn genau zwei Rotationsfreiheitsgrade vorgesehen sind, sind die die Rotationsfreiheitsgrade vorgebenden (virtuellen) Achsen bevorzugt rechtwinklig und bevorzugt jeweils rechtwinklig zur Werkstückrotationsachse beziehungsweise rechtwinklig zur Schleifscheibenrotationsachse ausgerichtet. Eine mehrfache oder kontinuierliche Änderung des Anstellwinkels erfolgt in diesem Fall, indem die Schleifscheibe(n) oder das Werkstück um beide Rotationsfreiheitsgrade gleichzeitig oder nacheinander verschwenkt wird.

Wenn die Anstelleinrichtung drei Rotationsfreiheitsgrade aufweist, so kann die Schleifscheibenrotationsachse beziehungsweise die Werkstückrotationsachse in den durch die Anstelleinrichtung vorgegebenen Grenzen beliebig um drei (virtuelle) Achsen geschwenkt und somit beliebig ausgerichtet/angestellt werden. In diesem Fall erfolgt eine mehrfache oder kontinuierliche Änderung des Anstellwinkels durch gleichzeitiges oder nacheinander erfolgendes Ausrichten der Schleifscheibe beziehungsweise des Werkstücks um die drei Rotationsfreiheitsgrade.

Wenn die Änderung des Anstellwinkels gleichzeitig um zwei Rotationsfreiheitsgrade erfolgt, so beschreibt die dazugehörige Schleifscheibenrotationsachse oder Werkstückrotationsachse eine Bewegung, die auf einem (virtuellen) Abschnitt einer Kegelfläche liegt.

Die Änderung des Anstellwinkels erfolgt insbesondere in einer solchen Weise, dass der maximale Schwenkwinkel um den ersten Rotationsfreiheitsgrad und gegebenenfalls um den zweiten Rotationsfreiheitsgrad zwischen -3° und +3° aus einer Ausgangslage, bevorzugt zwischen +1° und -1° aus einer Ausgangslage erfolgt, wobei der Anstellwinkel zwischen Werkstückrotationsachse und Schleifscheiben in der Ausgangslage bis zu 3°, bevorzugt bis zu 1° betragen kann.

Wenn der Anstellwinkel kontinuierlich oder in diskreten Schritten geändert wird, kann der Anstellwinkel eine oszillierende Hin- und Herbewegung beschreiben. Wenn die Änderung des Anstellwinkels um einen Rotationsfreiheitsgrad erfolgt, so oszilliert beispielsweise der Anstellwinkel zwischen +3° und -3° aus einer Ausgangslage. Es ist dabei bevorzugt vorgesehen, dass bereits in der Ausgangslage ein sich von 0° unterscheidender Anstellwinkel zwischen der Schleifscheibe und dem Werkstück vorliegt. Insbesondere ist die Ausgangslage so gewählt, dass selbst an den Umkehrpunkten der oszillierenden Bewegung keine parallele Ausrichtung der Schleifscheibe zu dem Werkstück vorliegt. Die Schleifscheibe ist also während der gesamten Bearbeitung zu dem Werkstück angestellt.

Wenn eine Änderung des Anstellwinkels um zwei Rotationsfreiheitsgrade erfolgt, so kann auch in diesem Fall vorgesehen sein, dass eine oszillierende Bewegung des Anstellwinkels zwischen zwei Umkehrstellen vorgesehen ist.

Die mindestens eine Anstelleinrichtung kann beispielsweise eine oder mehrere (Schwenk-)Achse(n), Kugelfläche(n), Kalottenfläche(n) oder Festkörpergelenke zur Realisierung des einen Freiheitsgrads oder der mehreren Freiheitsgrade umfassen. Bevorzugt ist jedoch, dass die Anstelleinrichtung eine Magnetspindel umfasst, bei der die Spindelwelle berührungslos gelagert ist.

Zum Inkontaktbringen der mindestens einen Schleifscheibe mit der Werkstückfläche kann mindestens eine Zustelleinrichtung vorgesehen sein, mit der das Werkstück (beziehungsweise dessen Werkstückantriebseinrichtung) und die Schleifscheibe (beziehungsweise deren Schleifscheibenantriebseinrichtung) relativ zueinander zugestellt werden können. Prinzipiell wäre es ausreichend, wenn nur eine Zustelleinrichtung (für die Werkstückantriebseinrichtung oder die Schleifscheibenantriebseinrichtung) vorgesehen ist, mit der eine Relativbewegung parallel und/oder orthogonal zu der Werkstückrotationsachse ausgeführt werden kann. Bevorzugt ist aber, dass zumindest eine Zustelleinrichtung vorgesehen ist, mit der das Werkstück (beziehungsweise die Werkstückantriebseinrichtung) in einer zu der Werkstückrotationsachse orthogonalen Ebene (insbesondere radial zu der Werkstückrotationsachse) zu den bevorzugt insbesondere jeweils einer Anstelleinrichtung zugeordneten Schleifscheibenantriebseinrichtungen bewegt werden kann. Es kann aber auch vorgesehen sein, dass jeder Schleifscheibenantriebseinrichtung eine Zustelleinrichtung zugeordnet ist, mit der die Schleifscheibenantriebseinrichtung in einer Ebene orthogonal zu der Werkstückrotationsachse und/oder axial bewegt werden kann. Mit der mindestens einen Zustelleinrichtung kann somit eine insbesondere translatorische Relativbewegung der Schleifscheibe(n) und des Werkstücks erzeugt werden, wobei die translatorische Relativbewegung insbesondere vor der eigentlichen Bearbeitung mehrere Zentimeter betragen kann. Mit der Magnetspindel ist es möglich, während der Bearbeitung eine translatorische Bewegung (insbesondere in drei Raumrichtungen) zu erzeugen, deren Größenordnung im Zehntelmillimeterbereich liegt. Eine solche translatorische Relativbewegung durch die Magnetspindel kann der durch die Magnetspindel bedingte Änderung des Anstellwinkels überlagert sein, so dass eine ansonsten stattfindende Änderung der Kontaktstelle zwischen Schleifscheibe und Werkstück aufgrund der Änderung des Anstellwinkels durch die lineare Relativbewegung (ggf. in mehrere Raumrichtungen) kompensiert wird.

In einer Ausführungsform kann vorgesehen sein, dass die Schleifscheibe und das Werkstück während des Bearbeitens relativ in einer Ebene rechtwinklig zur Werkstückrotationsache zueinander bewegt werden. Dementsprechend ist zumindest eine Zustelleinrichtung so eingerichtet, dass die Schleifscheibe(n) und das Werkstück während des Bearbeitens relativ zueinander in einer zu der Werkstückrotationsachse rechtwinkligen Ebene bewegbar sind. Dementsprechend wird also die rotierende Schleifscheibe (oder die rotierenden Schleifscheiben) auf einer in der zu der Werkstückrotationsachse rechtwinkligen Ebene angeordneten Bahn relativ zu dem rotierenden Werkstück bewegt (insbesondere in radialer Richtung linear auf die Werkstückrotationsachse zu oder von dieser weg). Auf diese Weise kann die gesamte zu bearbeitende Werkstückfläche einer Seite des Werkstücks mittels der Schleifscheibe bearbeitet werden und gegebenenfalls ein gewünschter Kreuzschliff erzeugt werden. Ein solches Vorgehen ist auch als Schälschleifen bekannt. Es wird also insbesondere vorgeschlagen, dass während des Schälschleifens der Anstellwinkel zumindest zeitweise kontinuierlich oder mehrmals geändert wird.

In diesem Zusammenhang ist insbesondere vorgesehen, dass die Schleifscheibe(n) zu dem bevorzugt als Bremsscheibe ausgebildeten Werkstück beispielsweise in die oben beschriebene Ausgangslage angestellt werden, während die Schleifscheiben mit der Werkstückfläche (noch) nicht in Kontakt sind. Zur Bearbeitung erfolgt daraufhin eine Relativbewegung in einer zu der Werkstückrotationsachse orthogonalen Ebene, so dass die Schleifscheiben die Werkstückflächen der Bremsscheibe von radial außen nach radial innen bearbeiten (und im Folgenden gegebenenfalls in entgegengesetzter Richtung), währenddessen eine mehrfache oder kontinuierliche Änderung des Anstellwinkels erfolgt. Auf diese Weise kann ein hoher Abtrag erzielt werden.

Es wird zudem vorgeschlagen, dass in einem ersten Bearbeitungsschritt die Bearbeitung der Werkstückfläche mit der/den angestellte(n) Schleifscheibe(n) und sich änderndem Anstellwinkel erfolgt, während in einem nachfolgenden Bearbeitungsschritt die Werkstückrotationsachse und die Schleifscheibenrotationsachse parallel zueinander ausgerichtet sind, so dass die Schleifscheibe(n) mit einer relativ großen Fläche an der (jeweiligen) Werkstückfläche anliegt/anliegen. In dem ersten Bearbeitungsschritt mit angestellter Schleifscheibe und sich änderndem Anstellwinkel erfolgt also ein relativ hoher Abtrag an Material von der hartstoffbeschichteten Werkstückfläche, während in dem nachfolgenden Bearbeitungsschritt eine höhere Oberflächengüte (beispielsweise Formgenauigkeit und/oder erforderliche Rauheit) erzielt werden kann.

In einer bevorzugten Ausführungsform ist die Schleifscheibe nicht aus einem Vollmaterial gefertigt, sondern umfasst mindestens ein, bevorzugt mehrere, an ihrer radialen Umfangsfläche angeordnete(s) Schleifsegment(e). In diesem Fall umfasst die Schleifscheibe also einen die Geometrie der Schleifscheibe vorgebenden Träger, der an den zur Bearbeitung vorgesehenen Schleifsegmenten Bindemittel mit dem darin eingelassenen Schleifmaterial aufweist.

Insbesondere mittels der vorgeschlagenen Magnetspindel ist es auf einfache Weise möglich, eine Bremsscheibe zu bearbeiten, die eine Schirmung aufweist. Eine solche, eine Schirmung aufweisende Bremsscheibe umfasst insbesondere einen zentralen Befestigungsabschnitt, mit welchem die Bremsscheibe im bestimmungsgemäßen Zustand am Fahrzeug befestigt wird. An diesen Befestigungsabschnitt schließt sich der eigentliche Bremsbelag (Reibringfläche) an, welcher mittels des erfindungsgemäßen Verfahrens und der erfindungsgemäßen Vorrichtung bearbeitet wird. Die Schirmung beschreibt dabei einen Winkel zwischen der Mittelachse des Befestigungsabschnitt und dem Bremsbelag der Bremsscheibe, wobei bei einer Schirmung dieser Winkel von 90° abweicht. Eine solche Schirmung kann beispielsweise durch eine in radialer Richtung von innen nach außen abnehmende (Hartstoff-)Beschichtung des Bremsbelages entstehen. Insbesondere mittels einer Magnetspindel kann also die Ausrichtung der Schleifscheibe einfach an die Schirmung der Bremsscheibe angepasst werden, um den notwendigen Abtrag an der die Schirmung bedingende Reibringfläche so gering wie möglich zu halten. Hierdurch wird eine ressourcenschonende Bearbeitung ermöglicht, welche mit einer geringeren Bearbeitungszeit einhergeht. Somit kann die Ausgangsschirmung beibehalten werden.

Die Vorrichtung umfasst insbesondere eine Steuereinrichtung, die zur Durchführung des beschriebenen Verfahrens eingerichtet ist.

Die Erfindung sowie das technische Umfeld werden im Folgenden anhand der Figuren beispielshaft erläutert, wobei die Figuren nur eine beispielhafte Ausführungsform darstellen. Es zeigen schematisch
- Figur 1:: eine Vorrichtung zur Bearbeitung einer hartstoffbeschichteten Bremsscheibe,
- Figur 2:: eine Detailansicht der Vorrichtung mit einer Anstelleinrichtung für eine Schleifscheibe,
- Figur 3:: eine Schnittansicht durch die Anstelleinrichtung,
- Figur 4:: eine weitere Schnittansicht durch die Anstelleinrichtung,

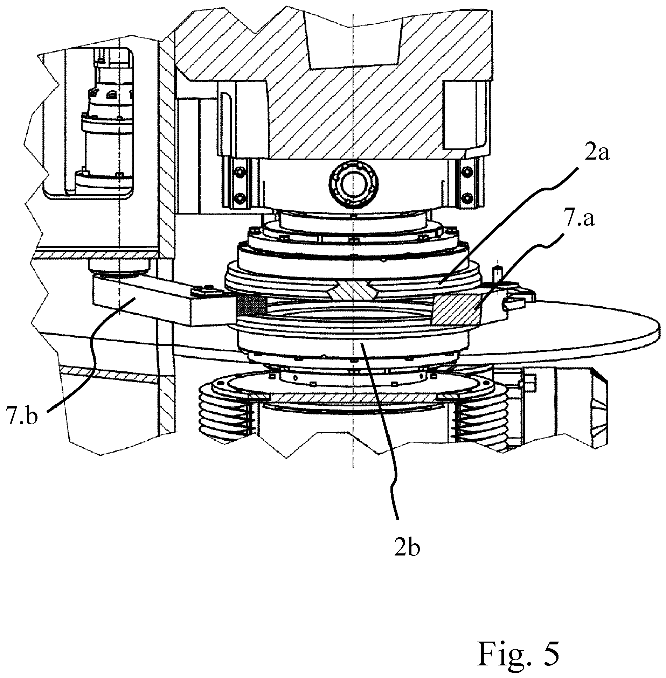

- Figur 5:: eine Detailansicht der Vorrichtung während des Konditionierens der Schleifscheibe,
- Figur 6a:: eine schematische Darstellung des Verfahrensablaufs zur Bearbeitung der Bremsscheibe mittels Einstechschleifen bei Nutzung von einem Rotationsfreiheitsgrad,
- Figur 6b:: eine schematische Darstellung des Verfahrensablaufs zur Bearbeitung der Bremsscheibe mittels Schälschleifen bei Nutzung von einem Rotationsfreiheitsgrad,
- Figur 7:: eine Aufsicht auf die Bremsscheibe und eine Schleifscheibe und
- Figur 8:: Perspektivansichten der Bremsscheibe und der Schleifscheiben bei Nutzung von zwei Rotationsfreiheitsgraden.

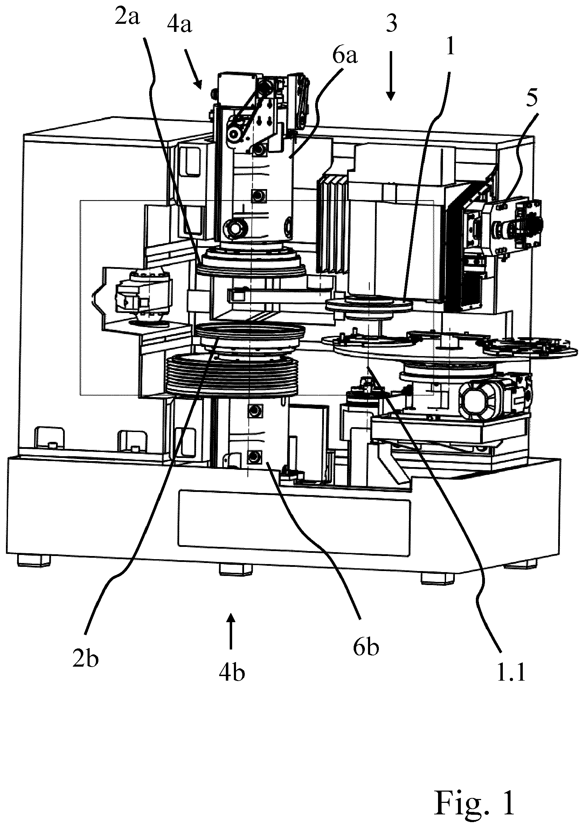

Die in Figur 1 dargestellte Vorrichtung zur Bearbeitung eines als Bremsscheibe ausgebildeten, hartstoffbeschichteten Werkstücks 1 umfasst eine Werkstückantriebseinrichtung 3, mit der die Bremsscheibe 1 zu einer Rotationsbewegung um eine Werkstückrotationsachse 1.1 angetrieben werden kann. Die Vorrichtung umfasst zudem eine Zustelleinrichtung 5, mit der die Bremsscheibe 1 und die Werkstückantriebseinrichtung 3 in horizontaler Richtung und in vertikaler Richtung verfahren werden kann.

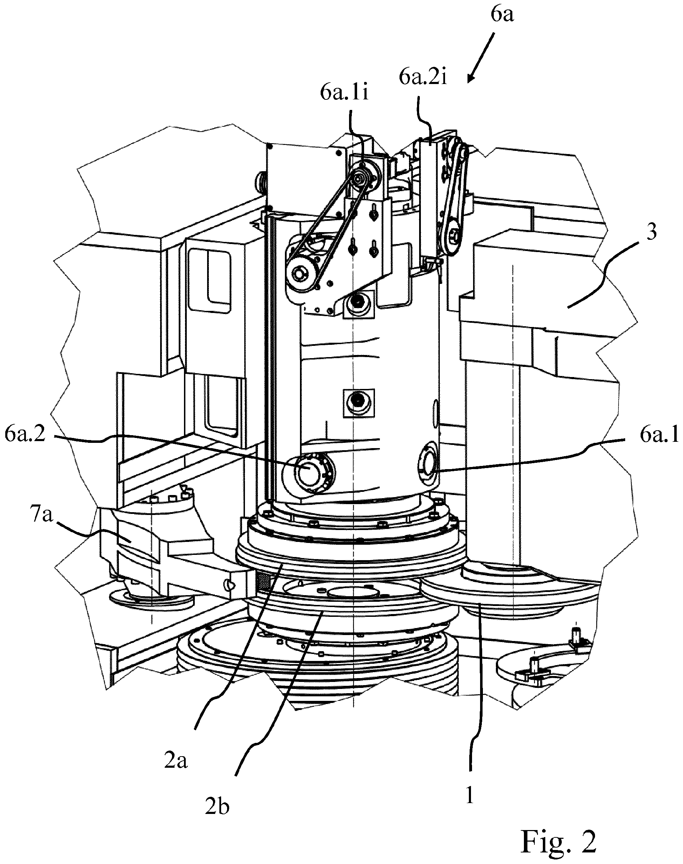

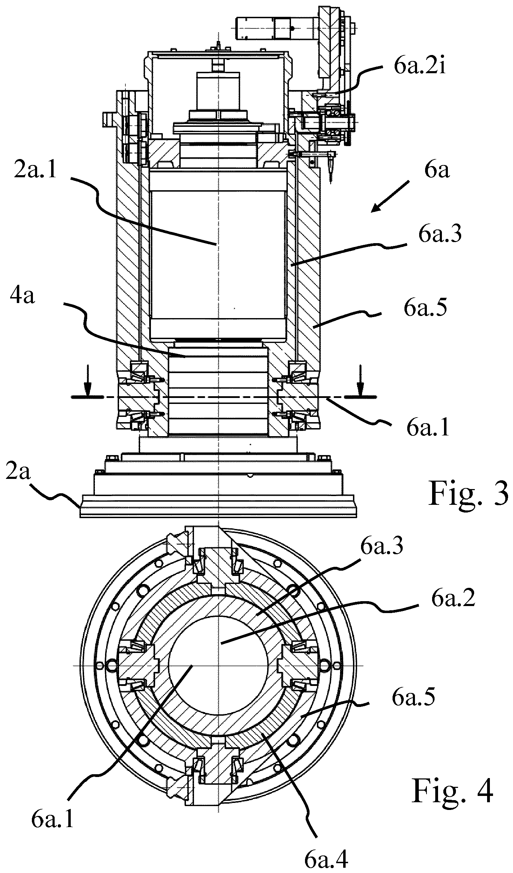

Die Vorrichtung umfasst zudem eine erste, in einer ersten Anstelleinrichtung 6a gelagerte Schleifscheibenantriebseinrichtung 4a, mit der eine erste Schleifscheibe 2a um eine Schleifenscheibenrotationsachse 2a.1 zu einer Rotationsbewegung angetrieben werden kann. Die Vorrichtung umfasst zudem eine zweite, in einer zweiten Anstelleinrichtung 6b gelagerte Schleifscheibenantriebseinrichtung 4b, mit der eine zweite Schleifscheibe 2b zu einer Rotationsbewegung um eine zweite Schleifscheibenrotationsachse 2b.1 angetrieben werden kann. Die Anstelleinrichtungen 6a, 6b werden mit Bezug zu den Figuren 2 bis 4 noch im Detail erläutert.

Die erste Anstelleinrichtung 6a und eine darin gelagerte erste Schleifscheibenantriebseinrichtung 4a werden nun mit Bezug zu den Figuren 2 bis 4 näher erläutert, wobei darauf hingewiesen wird, dass die zweite Schleifscheibenantriebseinrichtung 4b und die zweite Anstelleinrichtung 6b gleich aufgebaut sind. Die erste Anstelleinrichtung 6a umfasst eine innere Lagerhülse 6a.3, in der die Antriebseinrichtung 4a zur Erzeugung einer Rotationsbewegung der ersten Schleifscheibe 2a angeordnet ist. Die innere Lagerhülse 6a.3 ist um eine erste Schwenkachse 6a.1 in einer zweiten Lagerhülse 6a.4 schwenkbar gelagert, während die zweite Lagerhülse 6a.4 um eine zweite Schwenkachse 6a.2 in einer Außenhülse 6a.5 schwenkbar gelagert ist. Die erste Schleifscheibenantriebseinrichtung 4a und damit auch die ersten Schleifenscheibenrotationsachse 2a.1 können somit um zwei Rotationsfreiheitsgrade verschwenkt werden. Hierzu ist ein erster Anstellantrieb 6a.1i vorgesehen, mit dem die innere Lagerhülse 6a.3 um die erste Schwenkachse 6a.1 verschwenkbar ist. Zudem ist ein zweiter Anstellantrieb 6a.2i vorgesehen, mit dem die zweite Lagerhülse um die zweite Schwenkachse 6a.2 verschwenkbar ist. Die Erfindung ist aber bevorzugt auch nur mit einer Schwenkachse und insbesondere mit einem zugehörigen Anstellantrieb realisierbar.

Die erste Anstelleinrichtung 6a und die zweite Anstelleinrichtung 6b können durch nicht dargestellte Antriebe zumindest in horizontaler Richtung zugestellt werden.

Zur Bearbeitung der Bremsscheibe 1 werden sowohl die Bremsscheibe 1 als auch die Schleifscheiben 2a, 2b rotatorisch angetrieben, wobei die Schleifscheiben 2a, 2b jeweils mit einer Seite der Bremsscheibe 1 in Kontakt gebracht werden. Es wird nun vorgeschlagen, dass während der Bearbeitung der Bremsscheibe 1 die Schleifscheiben 2a, 2b gegensinnig so angestellt sind, dass die erste Schleifscheibenrotationsachse 2a.1 und die zweite Schleifscheibenrotationsachse 2b.1 nicht parallel zu der Werkstückrotationsachse 1.1 ausgerichtet sind. Eine solche nichtparallele Anstellung der Schleifscheiben 2a, 2b kann mittels der Anstelleinrichtungen 6a, 6b erfolgen. Es wird zudem vorgeschlagen, dass der Anstellwinkel während des Bearbeitens zumindest zeitweise kontinuierlich oder mehrmals geändert wird.

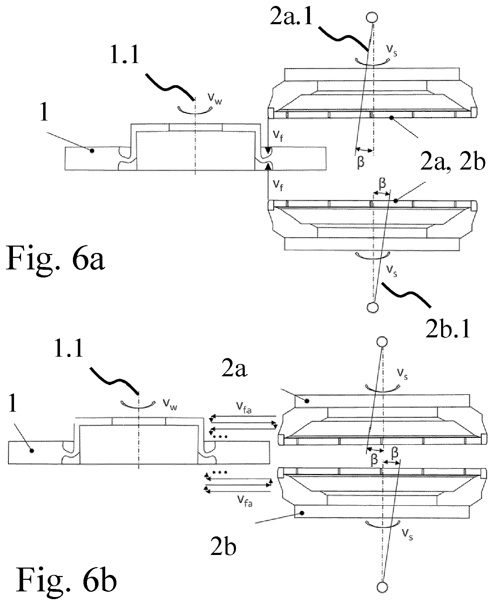

In den Figuren 6a und 6b sind ein bevorzugte Verfahrensabläufe dargestellt, auf welche die Erfindung aber nicht beschränkt ist. In beiden Ausführungsformen werden während der Bearbeitung sowohl die Bremsscheibe 1 als auch die Schleifscheiben 2a, 2b um ihre jeweiligen Rotationsachsen angetrieben und jede Schleifscheibe 2a, 2b ist mit der von ihr zu bearbeitenden Werkstückfläche in Kontakt. Aufgrund der Anstellung der Schleifscheiben 2a, 2b zu der Bremsscheibe 1 ist die Kontaktfläche zwischen der jeweiligen Schleifscheibe 2a, 2b und der zugehörigen Werkstückfläche (gegenüber einer parallelen Anstellung) reduziert, so dass bei gleicher externer Kraft ein höherer Druck zwischen Schleifscheibe 2a, 2b und Bremsscheibe 1 in der Kontaktzone vorliegt.

In Figur 6a ist das sogenannte Einstechschleifen dargestellt, bei dem die erste Schleifscheibe 2a und die zweite Schleifscheibe 2b während der Bearbeitung parallel zur Werkstückrotationsachse 1.1 mit der Geschwindigkeit v_{f} während der Bearbeitung in (vertikaler) z-Richtung aufeinander zu bewegt werden. Während der Bearbeitung wird zudem der Anstellwinkel β der ersten Schleifscheibenrotationsachse 2a.1 und der Anstellwinkel β der zweiten Schleifscheibenrotationsachse 2b.1 kontinuierlich geändert, indem die zugehörige Anstelleinrichtung um genau einen Rotationsfreiheitsgrad oszillierend geschwenkt wird.

In Figur 6b ist hingegen das sogenannte Schälschleifen dargestellt, bei dem die Bremsscheibe 1 und die Schleifscheiben 2a, 2b in horizontaler y-Richtung (also in radialer Richtung zu der Werkstückrotationsachse 1.1) so zueinander bewegt werden, dass die Schleifscheiben 2a, 2b jeweils mit einer zu bearbeitenden Werkstückfläche der hartstoffbeschichteten Bremsscheibe 1 in Kontakt kommen und die Werkstückflächen bearbeiten. Die Anstellwinkel β zwischen den Schleifscheiben 2a, 2b und der Bremsscheibe 1 werden während des Bearbeitens, also während die Schleifscheiben 2a, 2b in Kontakt mit der Bremsscheibe 1 sind, zumindest zeitweise kontinuierlich oder mehrmals geändert. Die Bremsscheibe 1 kann somit mit einer hohen Abtragsrate bei reduzierten Prozesskräften bearbeitet werden.

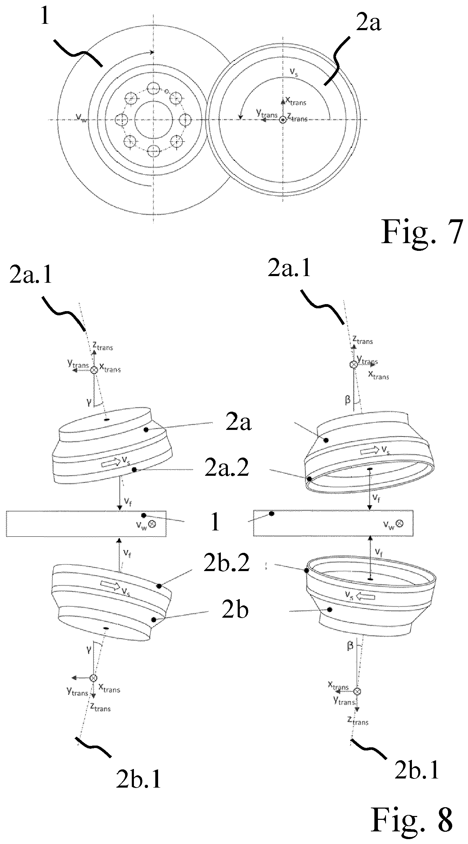

Figur 7 zeigt eine Aufsicht auf die Bremsscheibe 1 und die erste Schleifscheibe 2a. Die Bremsscheibe 1 wird mit einer Werkstückgeschwindigkeit v_{w} von bis zu 20 m/s am Außenumfang der Bremsscheibe 1 angetrieben. Die Schleifscheibe 2a wird mit einer Schleifscheibengeschwindigkeit vₛ von bis zu 300 m/s am Außenumfang der Schleifscheibe 2a angetrieben. Die Schleifscheiben 2a, 2b können sowohl in x- und y-Richtung als auch in z-Richtung translatorisch linear zugestellt werden. Mit einer Zustelleinrichtung kann dabei die Zustellung über mehrere Zentimeter erfolgen. Mittels Magnetspindeln zur Lagerung der Schleifscheiben 2a, 2b kann eine zusätzliche translatorische Zustellung in den drei Raumrichtungen erfolgen, wobei diese durch die Magnetspindel bestimmte translatorische Zustellung in einem Größenbereich bis 1 mm liegt.

Aus den Perspektivansichten der Figur 8 geht hervor, dass die Schleifscheiben 2a und 2b zu der Bremsscheibe 1 angestellt sind. Hierzu sind die erste Schleifscheibenrotationsachse 2a.1 und die zweite Schleifscheibenrotationsachse 2b.1 in der auf der linken Seite gezeigten Ebene um den Winkel γ gegenüber der Werkstückrotationsachse 1.1 angestellt/geneigt. In der auf der rechten Seite dargestellten Ebene der Figur 8 sind die erste Schleifscheibenrotationsachse 2a.1 und die zweite Schleifscheibenrotationsachse 2b.1 um den Winkel β angestellt/geneigt. Die Schleifscheiben 2a und 2b sind somit mit einem resultierenden Anstellwinkel zu der Bremsscheibe 1 angestellt. Für eine besonders effiziente Bearbeitung der Bremsscheibe 1 wird nun vorgeschlagen, dass sich die Anstellwinkel mehrfach oder kontinuierlich während der Bearbeitung ändern. Insbesondere wird hierbei vorgeschlagen, dass sich der Anstellwinkel oszillierend zwischen zwei Umkehrpunkten ändert. Hierzu kann beispielsweise vorgesehen sein, dass sich die Winkel γ und β gleichzeitig jeweils zwischen zwei Umkehrpunkten ändern. Somit wird die Form des Kontaktes zwischen den Schleifscheiben 2a und 2b und der Bremsscheibe 1 fortwährend geändert, wodurch sich die Abtragsrate konstant hochhalten lässt. Es ist somit ein besonders effizientes Bearbeiten der Bremsscheibe 1 möglich.

### Bezugszeichenliste

- 1: Werkstück
- 1.1: Werkstückrotationsachse
- 2a: erste Schleifscheibe
- 2a.1: erste Schleifscheibenrotationsachse
- 2a.2: Schleifbelag
- 2b: zweite Schleifscheibe
- 2b.1: zweite Schleifscheibenrotationsachse
- 2b.2: Schleifbelag
- 3: Werkstückantriebseinrichtung
- 4a: erste Schleifscheibenantriebseinrichtung
- 4b: zweite Schleifscheibenantriebseinrichtung
- 5: Zustelleinrichtung
- 6a: erste Anstelleinrichtung
- 6a.1: erste Schwenkachse
- 6a.2: zweite Schwenkachse
- 6a.1i: erster Anstellantrieb
- 6a.2i: erster Anstellantrieb
- 6a.3: innere Lagerhülse
- 6a.4: zweite Lagerhülse
- 6a.5: Außenhülse
- 6b: zweite Anstelleinrichtung

## Patentansprüche

1. Verfahren zur Bearbeitung einer hartstoffbeschichteten Werkstückfläche eines rotationssymmetrischen Werkstücks (1) mittels mindestens einer Schleifscheibe, umfassend die folgenden Schritte:
- Antreiben des Werkstücks (1) zu einer Rotationsbewegung um eine Werkstückrotationsachse (1.1),
- Antreiben einer Schleifscheibe (2a) zu einer Rotationsbewegung um eine Schleifscheibenrotationsachse (2a.1),
- Bearbeiten der Werkstückfläche mit der Schleifscheibe (2a), wobei die Schleifscheibe (2a) mit der Werkstückfläche in Kontakt ist, wobei ein Anstellwinkel zwischen der Schleifscheibenrotationsachse (2a.1) und der Werkstückrotationsachse (1.1) während des Bearbeitens geändert wird,
**dadurch gekennzeichnet, dass**
der Anstellwinkel während des Bearbeitens zumindest zeitweise kontinuierlich oder mehrmals geändert wird.

2. Verfahren nach Anspruch 1, wobei der Anstellwinkel um einen Rotationsfreiheitsgrad geändert wird.

3. Verfahren nach Anspruch 1, wobei der Anstellwinkel um zwei oder drei Rotationsfreiheitsgrade geändert wird.

4. Verfahren nach Anspruch 3, wobei die ändernde Anstellung der Schleifscheibenrotationsachse (2a.1) eine Bewegung auf einem Abschnitt einer Kegelfläche beschreibt.

5. Verfahren nach einem der vorhergehenden Ansprüche, wobei der Anstellwinkel um einen ersten Rotationsfreiheitsgrad zwischen -3° und +3° und bevorzugt um einen zweiten Rotationsfreiheitsgrad zwischen - 3° und +3° geändert wird.

6. Verfahren nach einem der vorhergehenden Ansprüche, wobei die Änderung des Anstellwinkels eine oszillierende Hin- und Herbewegung ist.

7. Verfahren nach einem der vorhergehenden Ansprüche, wobei die Werkstückrotationsachse (1.1) oder die Schleifscheibenrotationsachse(n) (2a.1, 2b.1) um einen Rotationsfreiheitsgrad oder um zwei oder drei Rotationsfreiheitsgrade zum Anstellen schwenkbar sind.

8. Verfahren nach einem der vorhergehenden Ansprüche, wobei die Schleifscheibe (2a) und das Werkstück (1) während des Bearbeitens relativ in einer Ebene rechtwinklig zur Werkstückrotationsachse (1.1) zueinander bewegt werden.

9. Verfahren nach einem der vorhergehenden Ansprüche, wobei eine zweite Werkstückfläche des rotationssymmetrischen Werkstücks (1) mittels einer zweiten, um eine zweite Schleifscheibenrotationsachse (2b.1) rotierenden Schleifscheibe (2b) bearbeitet wird, wobei ein Anstellwinkel zwischen der zweiten Schleifscheibenrotationsachse (2b.1) und der Werkstückrotationsachse (1.1) während des Bearbeitens zumindest zeitweise kontinuierlich oder mehrmals geändert wird.

10. Verfahren nach einem der vorhergehenden Ansprüche, wobei in einem nachfolgenden Bearbeitungsschritt die Werkstückrotationsachse (1.1) und die Schleifscheibenrotationsachse(n) (2a.1, 2b.1) parallel zueinander ausgerichtet sind.

11. Vorrichtung zur Bearbeitung einer hartstoffbeschichteten Werkstückfläche eines rotationssymmetrischen Werkstücks (1), umfassend:
- eine Werkstückantriebseinrichtung (3) zum Erzeugen einer Rotationsbewegung um eine Werkstückrotationsachse (1.1),
- mindestens eine Schleifscheibenantriebsreinrichtung (4a, 4b) zum Erzeugen einer Rotationsbewegung um eine Schleifscheibenrotationsachse (2a.1, 2b.1),
- mindestens eine Zustelleinrichtung (5) zum Inkontaktbringen der Schleifscheibe (2a, 2b) mit der Werkstückfläche und
- mindestens eine Anstelleinrichtung (6a, 6b), mit der die Schleifscheibenrotationsachse (2a.1, 2b.1) und die Werkstückrotationsachse (1.1) so zueinander anstellbar sind, dass die Schleifscheibenrotationsachse (2a.1, 2b.1) und die Werkstückrotationsachse (1.1) nicht parallel sind, wobei die mindestens eine Anstelleinrichtung (6a, 6b) so ausgebildet ist, dass die Werkstückrotationsachse (1.1) oder die Schleifscheibenrotationsachse(n) (2a.1, 2b.1) um mehrere Rotationsfreiheitsgrade schwenkbar ist.
**dadurch gekennzeichnet, dass**
die Anstelleinrichtung eine Magnetspindel umfasst.

12. Vorrichtung nach Anspruch 11, wobei die mindestens eine Zustelleinrichtung (5) so eingerichtet ist, dass die Schleifscheibe (2a, 2b) und das Werkstück (1) während des Bearbeitens relativ in einer zu der Werkstückrotationsachse (1.1) rechtwinkligen Ebene zueinander bewegbar sind.

13. Vorrichtung nach Anspruch 11 oder 12, umfassend eine zweite Schleifscheibenantriebsreinrichtung (4b) zum Erzeugen einer Rotationsbewegung um eine zweite Schleifscheibenrotationsachse (2b.1) und eine zweite Anstelleinrichtung (6b) zum Anstellen der zweiten Schleifscheibenrotationsachse (2b.1) zu der Werkstückrotationsachse (1.1), so dass die zweite Schleifscheibenrotationsachse (2b.1) und die Werkstückrotationsachse (1.1) nicht parallel sind.

14. Vorrichtung nach einem der Ansprüche 11 bis 13, umfassend eine Steuereinrichtung, die zur Durchführung eines Verfahrens nach einem der Ansprüche 1 bis 9 eingerichtet ist.
